**Europäisches Patentamt**

**European Patent Office**

**Office européen des brevets**

(19)

(11) Veröffentlichungsnummer : **0 489 078 B1**

(12) **EUROPÄISCHE PATENTSCHRIFT**

(45) Veröffentlichungstag der Patentschrift : **04.08.93 Patentblatt 93/31**

(51) Int. Cl.$^5$ : **B01D 53/32, B01J 19/12**

(21) Anmeldenummer : **90912915.7**

(22) Anmeldetag : **24.08.90**

(86) Internationale Anmeldenummer : **PCT/EP90/01417**

(87) Internationale Veröffentlichungsnummer : **WO 91/02580 07.03.91 Gazette 91/06**

(54) **VERFAHREN UND VORRICHTUNG ZUR ENTSORGUNG VON ORGANISCHEN DÄMPFEN, INSBESONDERE VON LÖSEMITTELDÄMPFEN.**

(30) Priorität : **26.08.89 DE 3928293**
**06.09.89 DE 3929542**

(43) Veröffentlichungstag der Anmeldung : **10.06.92 Patentblatt 92/24**

(45) Bekanntmachung des Hinweises auf die Patenterteilung : **04.08.93 Patentblatt 93/31**

(84) Benannte Vertragsstaaten :
**AT CH DE FR GB LI SE**

(56) Entgegenhaltungen :
**EP-A- 0 065 865**
**EP-A- 0 295 083**
**DE-A- 3 440 781**
**US-A- 4 076 606**

(73) Patentinhaber : **Mögel, Helmut**
**Eduard-Pfeiffer-Strasse 30**
**W-7000 Stuttgart 1 (DE)**

(72) Erfinder : **Mögel, Helmut**
**Eduard-Pfeiffer-Strasse 30**
**W-7000 Stuttgart 1 (DE)**

(74) Vertreter : **Wolf, Eckhard, Dr.-Ing.**
**Patentanwälte Wolf & Lutz Hauptmannsreute 93**
**W-7000 Stuttgart 1 (DE)**

Jouve, 18, rue Saint-Denis, 75001 PARIS

**Beschreibung**

Die Erfindung betrifft ein Verfahren und eine Vorrichtung zur Entsorgung von organischen Dämpfen, insbesondere von Lösemitteldämpfen, sowie die Verwendung des Verfahrens auf verwandten Anwendungsgebieten.

Beim Befüllen von Behältern oder Tankwagen mit flüchtigen Lösemitteln wird die im Behälter befindliche und mit Lösemittel gesättigte Luft aus dem Behälter verdrängt. Dabei gelangt um so mehr Lösemittel nach außen, je höher bei gegebener Temperatur der Dampfdruck und damit die Sättigungskonzentration des Lösemittels ist. Da viele Lösemittel, wie beispielsweise die chlorierten Kohlenwasserstoffe, umweltschädlich und/oder giftig sind, wird in zunehmendem Maße versucht, die beim Füllvorgang zwangsläufig austretenden Lösemitteldämpfe aufzufangen und auf chemischem oder physikalischem Wege zu entsorgen. Hierbei bietet sich einmal die katalytische Verbrennung an, die jedoch einen hohen baulichen und wartungstechnischen Aufwand erfordert und bei vielen Lösemitteldämpfen nicht zu dem erwünschten Ergebnis führt.

Ausgehend hiervon liegt der Erfindung die Aufgabe zugrunde, ein Verfahren und eine Vorrichtung der eingangs angegebenen Art zu entwickeln, womit die organischen Dämpfe mit relativ einfachen physikalischen Mitteln zersetzt und dadurch unschädlich gemacht werden können.

Zur Lösung dieser Aufgabe werden die in den Patentansprüchen 1 bis 3 bzw. 12 angegebenen Merkmalskombinationen vorgeschlagen. Weitere vorteilhafte Ausgestaltungen und Weiterbildungen der Erfindung ergeben sich aus den abhängigen Ansprüchen.

Die Erfindung geht von der physikalischen Erkenntnis aus, daß die in einer gasförmigen Umgebung immer vorhandenen freien Elektronen durch ein elektrisches Wechselfeld oszillierend beschleunigt, durch zunächst elastische Stöße mit den Gasmolekülen aus ihrer Bahn abgelenkt und dadurch allmählich aufgeheizt werden, bis es zu nichtelastischen Dissoziations- und Ionisationsstößen mit den Gasmolekülen kommen kann. Durch die Ionisation werden weitere Elektronen für die Stoßvorgänge freigesetzt, so daß es bei ausreichendem Energieeintrag über das elektrische Wechselfeld rasch zu einer großen Zahl an Dissoziationsstößen kommen kann. Da die Dissoziationsenergie der höhermolekularen Dampfmoleküle kleiner als die der begleitenden Luftmoleküle ist, werden bevorzugt die organischen Dampfmoleküle gespalten. Dementsprechend wird gemäß der Erfindung vorgeschlagen, daß die organischen Dämpfe durch ein elektromagnetisches Wechselfeld hindurchgeleitet und dort unter Energieaufnahme ionisiert und/oder dissoziiert werden (Elektromagnetische Pyrolyse). Gemäß der Erfindung werden die organischen Dämpfe dem elektrischen Wechselfeld einer stehenden elektromagnetischen Welle ausgesetzt und in dieser unter Energieaufnahme ionisiert und/oder dissoziiert. Die organischen Dämpfe werden dabei quer oder schräg zur Ausbreitungsrichtung der stehenden Welle im Bereich eines Amplitudenmaximums des elektrischen Feldvektors hindurchgeleitet und dort ionisiert und/oder dissoziiert.

Im Anschluß an den Spaltungsvorgang werden die Dissoziationsprodukte vorteilhafterweise unter Bildung niedermolekularer nichttoxischer Endprodukte rekombiniert, und/oder ausgewaschen und/oder abgefackelt.

Gemäß einer bevorzugten Ausgestaltung des erfindungsgemäßen Verfahrens werden die organischen Dämpfe mit einem Trägergas gemischt, bevor sie durch das elektromagnetische Wechselfeld hindurchgeleitet, vorzugsweise durchgesaugt werden. Als Trägergas kommt beispielsweise Luft in Betracht, wobei der Gesamtdruck des Trägergas/Dampfgemisches auf vorzugsweise 20 bis 200 mbar eingestellt werden kann. Allerdings ist für die Erzeugung dieser Unterdrücke ein relativ hoher apparativer Aufwand erforderlich. Um diesen Aufwand zu vermeiden, wird gemäß einer vorteilhaften Ausgestaltung der Erfindung vorgeschlagen, daß als Trägergas ein Edelgas, insbesondere Argon (technisches Argon) oder Helium verwendet wird. Der Gesamtdruck des Trägergas/Dampfgemisches kann in diesem Fall nahe dem Atmosphärendruck, vorzugsweise auf 0,7 bis 1 bar eingestellt werden. Der Dampfpartialdruck sollte in diesem Fall etwa 20 bis 300 mbar betragen.

Der Zusatz von Trägergas hat außerdem den Vorteil, daß die Gastemperatur trotz relativ hoher Elektronentemperaturen niedrig, vorzugsweise niedriger als 500 °C gehalten werden kann. Die Feldstärke des elektromagnetischen Feldes und die Gasdichte werden vorteilhafterweise so aufeinander abgestimmt, daß die organischen Dampfmoleküle nahezu vollständig und etwa vorhandene Stickstoffmoleküle zu weniger als 30 %, vorzugsweise zu weniger als 10 % dissoziiert werden. Die optimale Elektronentemperatur liegt bei etwa 2 bis 3 eV (ca. 20.000 bis 30.000 K). Die Funktionsfähigkeit ist selbstverständlich in einem etwas weiteren Elektronentemperaturbereich zwischen etwa 10.000 bis 50.000 K gewährleistet.

Die Durchsatzrate der organischen Dämpfe durch das elektromagnetische Feld kann dabei nach Maßgabe der Dampfbeschaffenheit und -konzentration im Gasgemisch vorzugsweise durch eine variable Drosselung des Gasstroms geregelt und damit dem Leistungsangebot und der gewünschten Abgaszusammensetzung angepaßt werden.

Die organischen Dämpfe werden vorteilhafterweise durch ein das elektromagnetische Wechselfeld durchsetzendes Isolatorrohr, vorzugsweise ein Quarz- oder Keramikrohr geleitet, das erforderlichenfalls außensei-

2

tig mit Kühlluft beaufschlagt werden kann.

Die erfindungsgemäße Vorrichtung weist in ihrer bevorzugten Ausgestaltung mindestens einen metallischen Hohlleiter, einen an den Hohlleiter angeschlossenen Mikrowellensender und mindestens ein den Hohlleiter durchsetzendes, zumindest im Bereich des Hohlleiters aus einem Isolatormaterial bestehendes Dampfrohr auf, welch letzteres eintrittsseitig mit den organischen Dämpfen beaufschlagbar und austrittsseitig mit einer Saugpumpe verbunden ist. Die Dampfleitung kann eintrittsseitig an einen Sammelbehälter angeschlossen werden, der über ein Drosselorgan mit mindestens einer Dampfquelle verbunden ist, wobei als Dampfquelle beispielsweise eine Befüllstelle eines Lösemittelbehälters oder eines Tankwagens in Betracht kommt. Bei höheren Leistungsanforderungen können an den Sammelbehälter mehrere, durch je einen mit einem Mikrowellensender bestückte Hohlleiter führende und mit einer gemeinsamen Saugpumpe verbundene Dampfleitungen bündelweise angeschlossen werden. Dadurch erhält man einen modulartigen Aufbau, der flexibel an unterschiedliche Leistungsanforderungen angepaßt werden kann. Die Dampfrohre werden dabei zweckmäßig in gleichen Winkelabständen voneinander in paralleler Ausrichtung am Sammelbehälter angeschlossen, während die von den Dampfleitungen durchdrungenen Hohlleiter sternartig in gleichen Winkelabständen voneinander über die Dampfleitungsanordnung überstehen, wobei die Mikrowellensender außenliegend und die Dampfleitungen innenliegend am Hohlleiter angeordnet sind. Aus Platzgründen können die Hohlleiter abwechselnd in zwei verschiedenen Ebenen angeordnet werden.

Da ein Teil der Mikrowellenenergie in Wärme umgesetzt wird, wird der Hohlleiter nach einer bevorzugten Ausgestaltung der Erfindung mit einem Kühlgas, vorzugsweise mit Kühlluft beaufschlagt. Das Kühlgas wird zweckmäßig in der Nähe der Anschlußstelle des Mikrowellensenders in den Hohlleiter unter Überdruck eingespeist, während in der Nähe der Durchdringungsstellen der Dampfleitung Öffnungen oder Perforationen in der Hohlleiterwand für den Kühlgasaustritt vorgesehen werden können.

Der Mikrowellensender ist vorteilhafterweise als Magnetron ausgebildet der bei einer Frequenz von 1 bis 10 GHz vorzugsweise bei 2,4 GHz arbeitet. Der Hohlleiter weist vorteilhafterweise einen rechteckigen Querschnitt auf und ist vorzugsweise an seinen stirnseitigen Enden geschlossen. Dadurch kann in den Hohlleiter über den Mikrowellensender eine stehende elektromagnetische Welle mit quer zur Ausbreitungsrichtung ausgerichtetem elektrischen Feld eingekoppelt werden. In einem solchen Falle durchsetzt die Dampfleitung den Hohlleiter parallel oder schräg zur Ausbreitungsrichtung im Bereich eines Amplitudenmaximums des elektrischen Feldvektors. Wichtig ist, daß die Dampfleitung zumindest in dem den Hohlleiter durchsetzenden Bereich aus einem Isolatormaderial, vorzugsweise aus Quarz oder einem nicht leitenden Keramikmaterial besteht.

Das erfindungsgemäße Verfahren wird primär zur pyrolytischen Zersetzung und Entsorgung von organischen Lösemitteldämpfen eingesetzt. Hierzu gehören u.a. die folgenden Stoffe:
Methylenchlorid, Trichlorethylen, 1,1,1 Trichlorethan, Perchlorethylen, Methylacetat, Ethylacetat, Butylacetat, Ethylglykolacetat, Cyclohexanon, Ethylglykol, Butylglykol, Monophenylglykol, Butylglykolacetat, Dimethylformamid, Diacetonalkohol, Monoethylenglykol, Methanol, Ethanol, Butanol, Xylol, Petroleum, Benzin, Toluol, Solventnaphta, Methylethylketon (MEK), Methylisobutylketon (MIBK), Methoxypropylacetat, Aceton.

Neben den Lösemitteldämpfen können mit dem erfindungsgemäßen Verfahren auch noch andere organische Gase und Dämpfe, wie Brennstoffdämpfe oder Gift- und Kampfgase, oder auch Dioxin entsorgt werden.

Im folgenden wird die Erfindung anhand eines in der Zeichnung in schematischer Weise dargestellten Ausführungsbeispiels näher erläutert. Es zeigen

Fig. 1 ein Schema einer Entsorgungsanlage für Lösemitteldämpfe;
Fig. 2 eine Seitenansicht einer elektromagnetischen Pyrolysezelle,
Fig. 3 einen Schnitt entlang der Schnittlinie 3-3 der Fig. 2 in schaubildlicher Darstellung;
Fig. 4 eine Seitenansicht eines Entsorgungsmodul mit acht elektromagnetischen Pyrolysezellen,
Fig. 5 eine Draufsicht auf das Entsorgungsmodul nach Fig. 4.

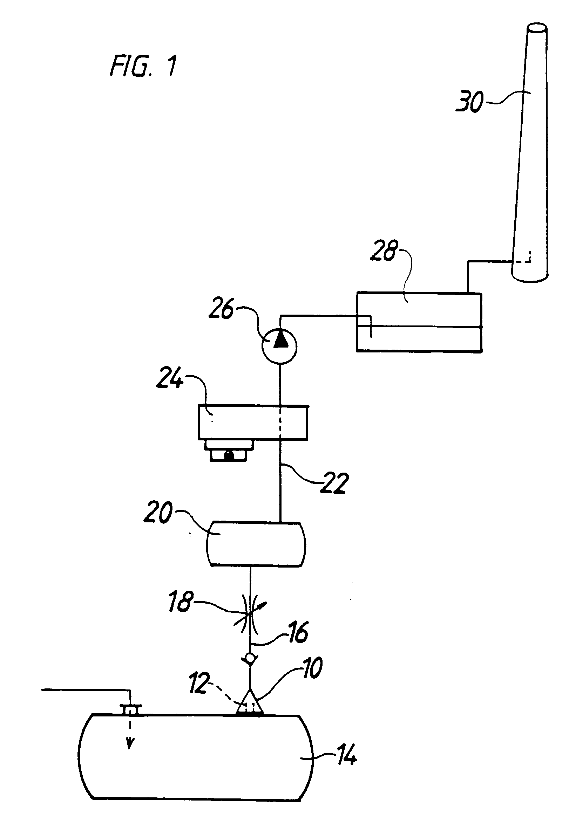

Die in Fig. 1 schematisch dargestellte Entsorgungsanlage für Lösemitteldämpfe besteht im wesentlichen aus einer Auffangvorrichtung 10 zur Aufnahme von aus einem Entlüftungsstutzen 12 eines Lösemittelbehälters 14 beim Befüllen entweichenden Lösemitteldämpfen, einem über eine Verbindungsleitung 16 und eine Verstelldrossel 18 mit der Auffangvorrichtung 10 verbundenen Sammelbehälter 20, mindestens einem am Sammelbehälterdeckel abgezweigten Dampfrohr 22, einer vom Dampfrohr durchsetzten elektromagnetischen Pyrolysezelle 24 einer hinter der Pyrolysezelle angeordneten, saugseitig an die Dampfleitung angeschlossenen Saugpumpe 26, einem druckseitig mit der Saugpumpe verbundenen Wäscher 28 und einem Zugrohr 30, in welchem die ankommenden Abgase erforderlichenfalls abgefackelt werden können.

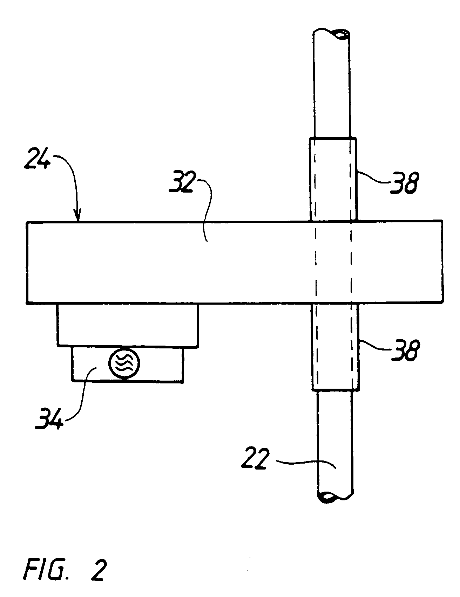

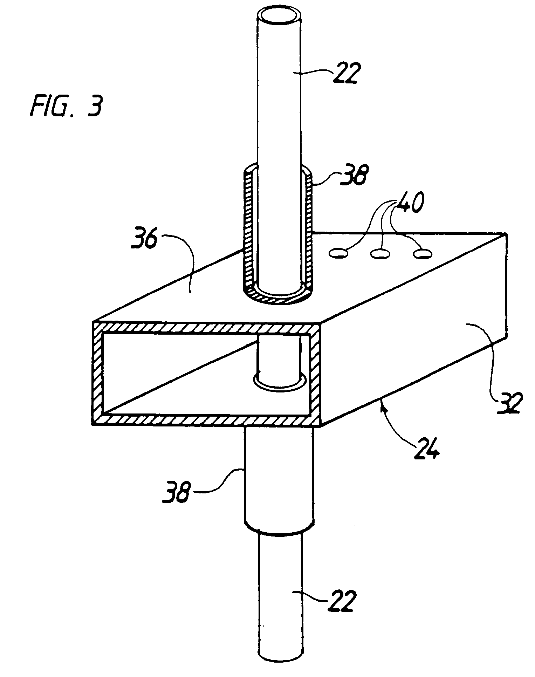

Wie insbesondere aus den Fig. 2 und 3 zu ersehen ist, enthält die elektromagnetische Pyrolysezelle 24 einen an beiden Enden geschlossenen, im Querschnitt rechteckigen metallischen Hohlleiter 32, in welchen über einen als Magnetron ausgebildeten Mikrowellensender 34 eine stehende elektromagnetische Mikrowelle mit einer Frequenz von ca. 2,4 GHz und einer Wellenlänge von ca. 12 cm einkoppelbar ist. Der elektrische Feldanteil ist dabei quer zur Ausbreitungsrichtung der Mikrowelle, senkrecht zu den Breitseitenflächen 36 des Hohlleiters ausgerichtet. Die aus Quarzglas oder einem nichtleitenden keramischen Material bestehende Dampfleitung 22 durchdringt den Hohlleiter im Abstand vom Magnetron 34 im Bereich eines Wellenberges des elektrischen Wechselfelds quer zur Ausbreitungsrichtung der Welle. Die an den Durchdringungsstellen der Dampfleitung 22 über die Breitseitenflächen 36 des Hohlleiters 32 nach außen überstehenden, die Dampfleitung umfassenden Abschirmrohre 38 sorgen dafür, daß an den Durchdringungsstellen keine Mikrowellen in den Außenraum austreten können. Der Hohlleiter und die den Hohlleiter durchdringende Dampfleitung werden von der Seite des Magnetrons her mit Kühlluft geflutet. Die aufgeheizte Kühlluft kann über die Durchdringungsöffnung der Dampfleitung und durch Perforationen 40 im Hohlleiter an die Umgebungsluft abgegeben werden.

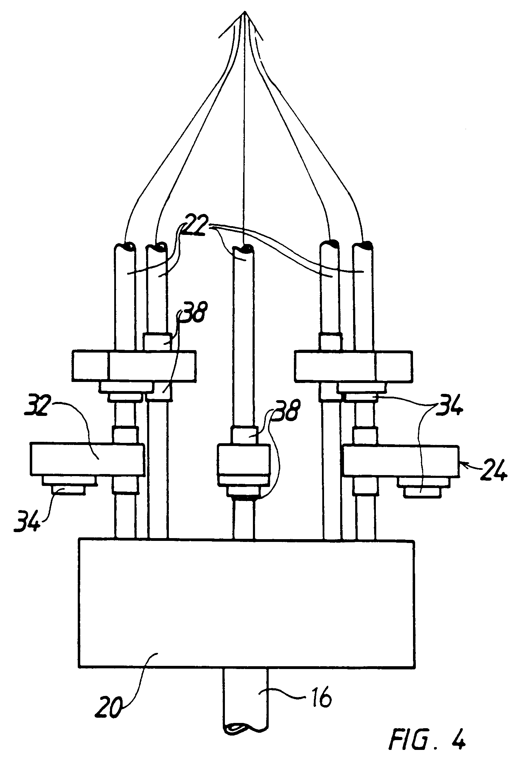

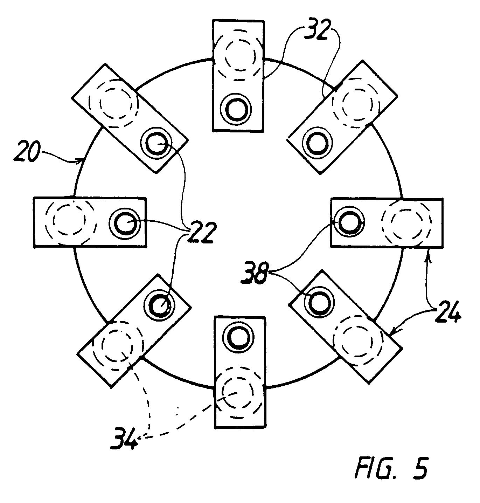

Die einzelne Pyrolysezelle arbeitet typischerweise mit einer Nennleistung von etwa 1,5 kW. Um auch höheren Leistungsanforderungen gerecht zu werden, können mehrere Einzelzellen zu einem Modul zusammengesetzt werden. So sind bei dem in den Fig. 4 und 5 gezeigten Ausführungsbeispiel insgesamt acht Pyrolysezellen 24 vorgesehen, deren Dampfleitungen 22 an einem gemeinsamen Sammelbehälter 20 angeschlossen und mit derselben Saugpumpe verbunden sind. Die zueinander parallel verlaufenden Dampfleitungen 22 sind in gleichen Winkelabständen voneinander am Deckel des Sammelbehälters 20 angeschlossen, während die Hohlleiter 32 mit ihrem Senderteil sternförmig nach außen weisend und aus Platzgründen in zwei Ebenen angeordnet radial über die Leitungsanordnung überstehen. Die in den Fig. 4 und 5 skizzierte Entsorgungseinheit mit acht Pyrolysezellen besitzt eine Gesamtleistung von ca. 12 kW, die für eine Zersetzung von 10 bis 15 kg organischem Lösemitteldampf pro Stunde ausreicht, der seinerseits je nach Sättigungskonzentration in ca. 10 bis 100 m³ Abluft enthalten sein kann.

Die in der elektromagnetischen Pyrolysezelle dissoziierten Moleküle rekombinieren zu Molekülen mit niedrigem Molekulargewicht, wie Kohlenmonoxid, Stickstoff, Wasserstoff und gegebenenfalls einigen Kohlenwasserstoffen, wie Methan, Ethan und dergleichen. Bei der Zersetzung chlorierter Kohlenwasserstoffe entsteht außerdem Chlorwasserstoff, der in dem nachgeordneten Gaswäscher 28 beispielsweise mit Natriumhydroxid neutralisiert und ausgewaschen werden kann. Außerdem werden dort die beim Zersetzungsprozeß entstehenden festen Kohlenstoffpartikel ausgeschwemmt. Die aus dem Wäscher 28 austretenden Abgase können über einen Induktionslüfter abgezogen und im Zugrohr 30 abgefackelt werden.

Als Dampfquelle kommen beispielsweise eine Befüllstelle bzw. ein Entlüftungsstutzen eines Lösemittelbehälters 14 oder ein Verdampfungsofen für flüssige oder feste Abfallstoffe in Betracht

**Ausführungsbeispiel:**

Die ersten Erprobungen werden mit einer elektromagnetischen Pyrolysezelle durchgeführt, die einen stirnseitig geschlossenen, mit Kühlluft beaufschlagbaren Rechteck-Hohlleiter mit den Abmessungen 40 x 80 x 250 mm (Höhe, Breite, Länge) sowie ein Magnetron mit einer Nennleistung von 1,5 kW und einer Arbeitsfrequenz von 2,4 GHz aufweist. Im Hohlleiter wird eine stehende $H_{10}$-Welle erzeugt. Die Dampfleitung durchsetzt den Hohlleiter im Bereich eines Amplitudenmaximums des elektrischen Feldvektors.

Die Versuche werden u.a. mit gesättigten Lösemitteldämpfen aus Methylenchlorid und Aceton durchgeführt. Die aufgrund einer Massen- und Energiebilanz gewonnenen Erwartungsdaten sind wie folgt:

**1. Methylenchlorid**

Zufuhrdaten:

| | | |
|---|---|---|
| Methylenchlorid | 1.535 | g/m³ |
| Luft | 501 | g/m³ |
| Zufuhrrate | 1,46 | m³/h |
| Leistung (Mikrowellen) | 1,5 | kW |
| Gasdruck in Dampfleitung | 100 | mbar |

Rekombinierte Ausgangsprodukte

| | | |
|---|---|---|
| $N_2$ | 0,53 | gmol/min |
| $O_2$ | 0 | gmol/min |
| CO | 0,28 | gmol/min |
| $CO_2$ | 0,0002 | gmol/min |
| HCl | 0,74 | gmol/min |
| $H_2$ | 0,73 | gmol/min |
| $H_2O$ | 0,0006 | gmol/min |
| C(fest) | 5,5 | g/min |

**2. Aceton**

Zufuhrdaten

| | | |
|---|---|---|
| Aceton | 750 | g/m³ |
| Luft | 1.341 | g/m³ |
| Zufuhrrate | 1,07 | m³/h |
| Leistung (Mikrowellen) | 1,5 | kW |
| Gasdruck in Dampfleitung | 100 | mbar |

Rekombinierte Ausgangsprodukte

| | | |
|---|---|---|
| $N_2$ | 0,63 | gmol/min |
| $O_2$ | 0 | gmol/min |
| CO | 0,55 | gmol/min |
| $CO_2$ | 0,0012 | gmol/min |
| HCl | 0 | gmol/min |
| $H_2$ | 0,68 | gmol/min |
| $H_2O$ | 0,0035 | gmol/min |
| C(fest) | 1,48 | g/min |

Bei den vorstehend angegebenen Energie- und Massenflüssen ist damit zu rechnen, daß die zugeführten organischen Lösemitteldämpfe quantitativ unter Bildung der angegebenen Ausgangsprodukte zerlegt werden.

**Patentansprüche**

1. Verfahren zur Entsorgung von organischen Dämpfen, insbesondere von Lösemitteldämpfen, bei welchem die organischen Dämpfe durch ein elektromagnetisches Wechselfeld hindurchgeleitet und dort ionisiert und/oder dissoziiert werden, **dadurch gekennzeichnet,** daß die organischen Dämpfe durch ein elektromagnetisches Wechselfeld mit stehender Welle quer oder schräg zur Ausbreitungsrichtung im Bereich eines Amplitudenmaximums des elektrischen Feldvektors hindurchgeleitet werden.

2. Verfahren nach Anspruch 1, **dadurch gekennzeichnet,** daß die Dissoziationsprodukte unter Bildung niedermolekularer Abgase rekombiniert und/oder ausgewaschen werden.

3. Verfahren nach Anspruch 2, **dadurch gekennzeichnet,** daß die brennbaren Bestandteile der Abgase abgefackelt werden.

4. Verfahren nach einem der Ansprüche 1 bis 3, **dadurch gekennzeichnet,** daß die organischen Dämpfe mit einem Trägergas gemischt werden, bevor sie durch das elektrische Wechselfeld hindurchgeleitet werden.

5. Verfahren nach Anspruch 4, **dadurch gekennzeichnet,** daß als Trägergas Luft verwendet wird.

6. Verfahren nach Anspruch 4 oder 5, **dadurch gekennzeichnet,** daß der Gesamtdruck des Trägergas/Dampfgemisches 20 bis 200 mbar beträgt.

7. Verfahren nach einem der Ansprüche 4 bis 6, **dadurch gekennzeichnet,** daß als Trägergas ein Edelgas, insbesondere Argon oder Helium verwendet wird.

8. Verfahren nach Anspruch 7, **dadurch gekennzeichnet,** daß der Gesamtdruck des Trägergas/Dampfgemisches 0,7 bis 1,2 bar beträgt, vorzugsweise etwa dem Atmosphärendruck entspricht.

9. Verfahren nach Anspruch 7 oder 8, **dadurch gekennzeichnet,** daß der Dampfpartialdruck 20 bis 300 mbar beträgt.

10. Verfahren nach einem der Ansprüche 1 bis 9, **dadurch gekennzeichnet,** daß die Gastemperatur der organischen Dämpfe bzw. des Trägergas/Dampfgemisches weniger als 500 °C beträgt.

11. Verfahren nach einem der Ansprüche 1 bis 10, **dadurch gekennzeichnet,** daß die Feldstärke des elektromagnetischen Wechselfeldes und die Gasdichte so aufeinander abgestimmt werden, daß die Elektronentemperatur 10.000 bis 50.000 K, vorzugsweise etwa 20.000 bis 30.000 K beträgt.

12. Verfahren nach einem der Ansprüche 1 bis 11, **dadurch gekennzeichnet,** daß die Feldstärke des elektromagnetischen Wechselfeldes und die Gasdichte so aufeinander abgestimmt werden, daß die vorhandenen organischen Dampfmoleküle nahezu vollständig und etwa vorhandene Stickstoffmoleküle zu weniger als 30 %, vorzugsweise zu weniger als 10 % dissoziiert werden.

13. Verfahren nach einem der Ansprüche 1 bis 12, **dadurch gekennzeichnet,** daß die Durchsatzrate der organischen Dämpfe durch das elektromagnetische Feld nach Maßgabe ihrer Beschaffenheit und Konzentration im Gasgemisch vorzugsweise durch variable Drosselung des zugeführten Dampfstroms geregelt wird.

14. Verfahren nach einem der Ansprüche 1 bis 13, **dadurch gekennzeichnet,** daß die organischen Dämpfe durch ein das elektromagnetische Wechselfeld durchsetzendes Isolatorrohr, vorzugsweise ein Quarz- oder Keramikrohr, hindurchgeleitet werden.

15. Verfahren nach einem der Anspruch 14, **dadurch gekennzeichnet,** daß das Isolatorrohr außenseitig mit Kühlluft beaufschlagt wird.

16. Verfahren nach einem der Ansprüche 1 bis 15, **dadurch gekennzeichnet,** daß die zu entsorgenden organischen Dämpfe beim Befüllen von Flüssigkeitsbehältern abgesaugt werden.

17. Verfahren nach einem der Ansprüche 1 bis 16, **dadurch gekennzeichnet,** daß die zu entsorgenden organischen Dämpfe durch Erhitzen flüssiger oder fester Abfallstoffe freigesetzt und von dort abgesaugt werden.

18. Vorrichtung zur Entsorgung von organischen Dämpfen, insbesondere Lösemitteldämpfen, mit mindestens einer elektromagnetischen Pyrolysezelle (24), bestehend aus einem metallischen Hohlleiter (32), einem an den Hohlleiter (32) angeschlossenen Mikrowellensender (34) und mindestens einer den Hohlleiter (32) durchsetzenden Dampfleitung (22), die eintrittsseitig mit den organischen Dämpfen beaufschlagbar ist, **dadurch gekennzeichnet,** daß in den Hohlleiter (32) eine stehende elektromagnetische Welle mit quer zur Ausbreitungsrichtung ausgerichtetem elektrischem Feldvektor einkoppelbar ist und daß die zumindest im Bereich des Hohlleiters aus Isolatormaterial bestehende Dampfleitung (22) den Hohlleiter (32) quer oder schräg zur Ausbreitungsrichtung der Welle im Bereich eines Amplitudenmaximums des elektrischen Feldvektors durchsetzt.

19. Vorrichtung nach Anspruch 18, **dadurch gekennzeichnet,** daß die Dampfleitung (22) austrittsseitig mit einer Saugpumpe (26) verbunden ist.

20. Vorrichtung nach Anspruch 18 oder 19, **dadurch gekennzeichnet,** daß die Dampfleitung (22) eintrittsseitig an einen Sammelbehälter (20) angeschlossen ist, der vorzugsweise über ein Drosselorgan (18) mit mindestens einer Dampfquelle verbindbar ist.

21. Vorrichtung nach Anspruch 20, **dadurch gekennzeichnet,** daß die Dampfquelle eine Befüllstelle oder ein Entlüftungsstutzten eines Lösemittelbehälters (14) ist.

22. Vorrichtung nach Anspruch 21, **dadurch gekennzeichnet,** daß die Dampfquelle ein Verdampfungsofen für flüssige oder feste Abfallstoffe ist.

23. Vorrichtung nach einem der Ansprüche 18 bis 22, **gekennzeichnet durch** eine vor der Pyrolysezelle in der Dampfleitung angeordnete, die organischen Dämpfe mit einem Edelgas, wie Argon oder Helium, vermischende Mischstation.

24. Vorrichtung nach einem der Ansprüche 18 bis 23, **dadurch gekennzeichnet,** daß an den Sammelbehälter (20) mehrere elektromagnetische Pyrolysezellen (24) angeschlossen sind.

25. Vorrichtung nach Anspruch 24, **dadurch gekennzeichnet,** daß die Dampfleitungen (22) der einzelnen Pyrolysezellen (24) in gleichen Winkelabständen voneinander am Sammelbehälter (20) angeschlossen sind.

26. Vorrichtung nach Anspruch 25, **dadurch gekennzeichnet,** daß die Dampfleitungen (22) in zueinander paralleler Ausrichtung über eine Begrenzungsfläche des Sammelbehälters (20) überstehen und daß die von den Dampfleitungen (22) durchdrungenen Hohlleiter (32) sternförmig in gleichen Winkelabständen voneinander über die Dampfleitungsanordnung überstehen.

27. Vorrichtung nach Anspruch 26, **dadurch gekennzeichnet,** daß die einander benachbarten Hohlleiter (32) abwechselnd in zwei Ebenen angeordnet sind.

28. Vorrichtung nach einem der Ansprüche 18 bis 27, **dadurch gekennzeichnet,** daß die Hohlleiter (32) mit einem Kühlgas, vorzugsweise mit Kühlluft beaufschlagbar sind.

29. Vorrichtung nach Anspruch 28, **dadurch gekennzeichnet,** daß das Kühlgas in der Nähe des Mikrowellensenders (34) in den Hohlleiter (32) unter Überdruck einspeisbar ist.

30. Vorrichtung nach Anspruch 28 bis 29, **dadurch gekennzeichnet,** daß die Hohlleiterwand (36) in der Nähe der Dampfleitungen (22) Öffnungen oder Perforationen (40) für den Kühlgasaustritt aufweist.

31. Vorrichtung nach einem der Ansprüche 19 bis 30, **dadurch gekennzeichnet,** daß die Saugpumpe (26) druckseitig an einen Abgaswäscher (28), insbesondere einen HCl-Wäscher angeschlossen ist.

32. Vorrichtung nach einem der Ansprüche 18 bis 31, **dadurch gekennzeichnet,** daß der Mikrowellensender (34) als Magnetron ausgebildet ist.

33. Vorrichtung nach einem der Ansprüche 18 bis 32, **dadurch gekennzeichnet,** daß der Mikrowellensender (34) eine Arbeitsfrequenz von 1 bis 10 GHz, vorzugsweise von 2,4 GHz aufweist.

34. Vorrichtung nach einem der Ansprüche 18 bis 33, **dadurch gekennzeichnet,** daß der Hohlleiter (32) einen rechteckigen Querschnitt aufweist und vorzugsweise an seinen stirnseitigen Enden geschlossen ist.

35. Vorrichtung nach einem der Ansprüche 18 bis 34, **dadurch gekennzeichnet,** daß die Dampfleitung (22) zumindest in dem den Hohlleiter (32) durchsetzenden Bereich aus einem Isolatormaterial, vorzugsweise aus Quarz oder einem Keramikmaterial besteht

36. Verwendung des Verfahrens nach einem der Ansprüche 1 bis 17 zur pyrolytischen Zersetzung und/oder Entsorgung von organischen Lösemittel- und Brennstoffdämpfen und/oder von Gift- und Kampfgasen.

37. Verwendung des Verfahrens nach einem der Ansprüche 1 bis 17 zur pyrolytischen Zersetzung und/oder Entsorgung eines oder mehrerer der folgenden organischen Dämpfe:
Methylenchlorid, Trichlorethylen, 1,1,1-Trichlorethan, Perchlorethylen, Methylacetat, Ethylacetat, Butylacetat, Ethylglykolacetat, Cyclohexanon, Ethylglykol, Butylglykol, Monophenylglykol, Butylglykolacetat, Dimethylformamid, Diacetonalkohol, Monoethylenglykol, Methanol, Ethanol, Butanol, Xylol, Petroleum, Benzin, Toluol, Solventnaphta, Methylethylketon (MEK), Methylisobutylketon (MIBK), Methoxypropylacetat, Aceton.

## Claims

1. A process for disposing of organic vapors, in particular of solvent vapors, in which the organic vapors are guided through an electromagnetic alternating field and are there ionized and/or dissociated, characterized in that the organic vapors are guided through an electromagnetic alternating field with a standing wave transversely or at an angle with respect to the direction of expansion in the area of a maximum amplitude of the electric field vector.

2. The process according to Claim 1, characterized in that the dissociation products are recombined and/or washed out forming low-molecular waste gases.

3. The process according to Claim 2, characterized in that the combustible parts of the waste gases can be flared off.

4. The process according to one of the Claims 1 to 3, characterized in that the organic vapors are mixed with a carrier gas prior to being guided through the electric alternating field.

5. The process according to Claim 4, characterized in that air is used as the carrier gas.

6. The process according to Claim 4 or 5, characterized in that the total pressure of the carrier gas/vapor mixture is 20 to 200 mbar.

7. The process according to one of the Claims 4 to 6, characterized in that an inert gas, in particular argon or helium, is used as the carrier gas.

8. The process according to Claim 7, characterized in that the total pressure of the carrier gas/vapor mixture is 0.7 to 1.2 bar, and corresponds preferably approximately with the atmospheric pressure.

9. The process according to Claim 7 or 8, characterized in that the partial vapor pressure is 20 to 300 mbar.

10. The process according to one of the Claims 1 to 9, characterized in that the gas temperature of the organic vapors or of the carrier gas/vapor mixture is less than 500°C.

11. The process according to one of the Claims 1 to 10, characterized in that the field strength of the electromagnetic alternating field and the gas density are adjusted to one another such that the electron temperature is 10,000 to 50,000 K, preferably approximately 20,000 to 30,00 K.

12. The process according to one of the Claims 1 to 11, characterized in that the field strength of the electromagnetic alternating field and the gas density are adjusted to one another such that the existing organic vapor molecules are almost completely dissociated and the possibly existing nitrogen molecules at less than 30%, preferably at less than 10%.

13. The process according to one of the Claims 1 to 12, characterized in that the rate of throughput of the organic vapors through the electromagnetic field is regulated in accordance with its composition and concentration in the gas mixture preferably through variable throttling of the supplied vapor flow.

14. The process according to one of the Claims 1 to 13, characterized in that the organic vapors are guided through an insulator pipe, preferably a quartz or ceramic pipe, extending through the electromagnetic alternating field.

15. The process according to Claim 14, characterized in that the insulator pipe is loaded with cooling air.

16. The process according to one of the Claims 1 to 15, characterized in that the organic vapors to be disposed are sucked off during filling of fluid containers.

17. The process according to one of the Claims 1 to 16, characterized in that the organic vapors to be disposed of are freed by heating of fluidy or solid waste materials and are sucked off from there.

18. A device for disposing of organic vapors, in particular of solvent vapors with at least one electromagnetic pyrolytic cell (24), comprising a metallic tubular conductor (32), a microwave transmitter (34) connected to the tubular conductor (32), and at least one vapor pipeline (22) extending through the tubular conductor (32), which vapor pipeline can be loaded at the inlet end with the organic vapors, characterized in that into the tubular conductor (32) can be coupled a standing electromagnetic wave with an electric field vector aligned transversely with respect to the direction of expansion, and that the vapor pipeline (22), which at least in the region of the tubular conductor consists of an insulating material, extends through the tubular conductor (32) transversely or at an angle with respect to the direction of expansion of the wave in the area of a maximum amplitude of the electric field vector.

19. The device according to Claim 18, characterized in that the vapor pipeline (22) is connected to a suction pump (26) at the outlet end.

20. The device according to Claim 18 or 19, characterized in that the vapor pipeline (22) is connected to a collecting reservoir (20) at the inlet end, which collecting reservoir (20) can be connected to at least one vapor source preferably through an adjustable throttle (18).

21. The device according to Claim 20, characterized in that the vapor source is a filling point or a ventilating pipe of a solvent container (14).

22. The device according to Claim 21, characterized in that the vapor source is an evaporation furnace for fluidy or solid waste materials.

23. The device according to one of the Claims 18 to 22, characterized by a mixing station arranged in front of the pyrolytic cell in the vapor pipeline and mixing the organic vapors with an inert gas, like argon or helium.

24. The device according to one of the Claims 18 to 23, characterized in that several electromagnetic pyrolytic cells (24) are connected to the collecting reservoir (20).

25. The device according to Claim 24, characterized in that the vapor pipelines (22) of the individual pyrolytic cells (24) are connected equidistantly from one another to the collecting reservoir (20).

26. The device according to Claim 25, characterized in that the vapor pipelines (22) extend parallel with one another beyond a boundary surface of the collecting reservoir (20), and that the tubular conductors (32), through which the vapor pipelines (22) extend, project radially outwardly at equal angular distances from one another beyond the vapor pipeline arrangement.

27. The device according to Claim 26, characterized in that the mutually adjacent tubular conductors (32) are arranged alternately in two planes.

28. The device according to one of the Claims 18 to 27, characterized in that the tubular conductors (32) can be loaded with a cooling gas, preferably with cooling air.

29. The device according to Claim 28, characterized in that the cooling gas can be fed with excess pressure near the microwave transmitter (34) into the tubular conductor (32).

30. The device according to Claims 28 to 29, characterized in that the tubular conductor wall (36) has near the vapor pipelines (22) openings or perforations (40) for the cooling gas exit.

31. The device according to one of the Claims 19 to 30, characterized in that the suction pump (26) is connected on the pressure side to a waste gas washer (28), in particular a HCl washer.

32. The device according to one of the Claims 18 to 31, characterized in that the microwave transmitter (34) is constructed as a magnetron.

33. The device according to one of the Claims 18 to 32, characterized in that the microwave transmitter (34) has an operating frequency of 1 to 10 GHz, preferably of 2.4 GHz.

34. The device according to one of the Claims 18 to 33, characterized in that the tubular conductor (32) has a rectangular cross section and is preferably closed at its front-side ends.

35. The device according to one of the Claims 18 to 34, characterized in that the vapor pipeline (22) consists at least in the area extending through the tubular conductor (32) of an insulating material, preferably of quartz or a ceramic material.

36. A use for the process according to one of the Claims 1 to 17 for the pyrolytic decomposition and/or disposing of organic solvent and fuel vapors and/or of poison and fighter gases.

37. A use for the process according to one of the Claims 1 to 17 for the pyrolytic decomposition and/or disposing of one or several of the following organic vapors: Methylene chloride, trichloroethylene, 1, 1, 1-trichloroethane, perchloroethylene, methyl acetate, ethyl acetate, butyl acetate, ethylene glycol acetate, cyclohexanone, ethylene glycol, butylene glycol, monophenyl glycol, butylene glycol acetate, dimethyl formamide, diacetone alcohol, monoethylene glycol, methanol, ethanol, butanol, xylol, petroleum, benzene, toluol, naphta solvent, methyl ethyl ketone (MEK), methyl isobutyl ketone (MIBK), methoxy propyl acetate and acetone.


**Revendications**

1. Procédé d'élimination de vapeurs organiques, en particulier de vapeurs de solvants, dans lequel on fait passer les vapeurs organiques dans un champ électromagnétique alternatif pour les y ioniser et/ou dissocier, caractérisé par le fait qu'on fait passer les vapeurs organiques dans un champ électromagnétique alternatif à onde stationnaire perpendiculairement à la direction de propagation de celle-ci ou obliquement par rapport à cette direction dans la zone d'un maximum d'amplitude du vecteur champ électrique.

2. Procédé selon la revendication 1, caractérisé par le fait qu'on recombine les produits de dissociation en formant des gaz perdus de basse masse moléculaire et/ou les élimine par lavage.

3. Procédé selon la revendication 2, caractérisé par le fait qu'on brûle à la torche les constituants combustibles des gaz perdus.

4. Procédé selon l'une des revendications 1 à 3, caractérisé par le fait qu'on mélange les vapeurs organiques avec un gaz porteur avant de les faire passer dans le champ électrique alternatif.

5. Procédé selon la revendication 4, caractérisé par le fait qu'on utilise comme gaz porteur l'air.

6. Procédé selon l'une des revendications 4 et 5, caractérisé par le fait que la pression totale du mélange gaz porteur-vapeurs est de 20 à 200 mbar.

7. Procédé selon l'une des revendications 4 à 6, caractérisé par le fait qu'on utilise comme gaz porteur un gaz rare, en particulier l'argon ou l'hélium.

8. Procédé selon la revendication 7, caractérisé par le fait que la pression totale du mélange gaz porteur-vapeurs est de 0,7 à 1,2 bar et de préférence correspond à peu près à la pression atmosphérique.

9. Procédé selon l'une des revendications 7 et 8, caractérisé par le fait que la pression partielle des vapeurs est de 20 à 300 mbar.

10. Procédé selon l'une des revendications 1 à 9, caractérisé par le fait que la température des vapeurs organiques ou du mélange gaz porteur-vapeurs est inférieure à 500 °C.

11. Procédé selon l'une des revendications 1 à 10, caractérisé par le fait qu'on accorde l'intensité du champ électromagnétique alternatif et la densité du gaz entre elles de façon que la température des électrons soit de 10 000 à 50 000 K et de préférence d'environ 20 000 à 30 000 K.

12. Procédé selon l'une des revendications 1 à 11, caractérisé par le fait qu'on accorde l'intensité du champ électromagnétique alternatif et la densité du gaz entre elles de façon à dissocier à peu près entièrement les molécules de vapeurs organiques existantes et à moins de 30 %, de préférence à moins de 10 %, les molécules d'azote éventuellement existantes.

13. Procédé selon l'une des revendications 1 à 12, caractérisé par le fait qu'on règle le débit de passage des vapeurs organiques dans le champ électromagnétique d'après leur nature et leur concentration dans le mélange de gaz, de préférence par étranglement variable du courant de vapeurs apporté.

14. Procédé selon l'une des revendications 1 à 13, caractérisé par le tait qu'on fait passer les vapeurs organiques dans un tuyau isolant, de préférence un tuyau en quartz ou en céramique, traversant le champ électromagnétique alternatif.

15. Procédé selon la revendication 14, caractérisé par le fait qu'on soumet extérieurement le tuyau isolant à l'action d'air de refroidissement.

16. Procédé selon l'une des revendications 1 à 15, caractérisé par le fait qu'on aspire les vapeurs organiques à éliminer lors du remplissage de réservoirs de liquides.

17. Procédé selon l'une des revendications 1 à 16, caractérisé par le fait qu'on libère les vapeurs organiques à éliminer en chauffant des déchets liquides ou solides et les en aspire.

18. Dispositif d'élimination de vapeurs organiques, en particulier de vapeurs de solvants, comportant au moins une cellule de pyrolyse électromagnétique (24) constituée d'un guide d'ondes métalliques (32), un émetteur de micro-ondes (34) raccordé à ce guide d'ondes (32) et au moins une conduite de vapeurs (22) traversant le guide d'ondes (32) dans laquelle peuvent être envoyées les vapeurs organiques, caractérisé par le fait que dans le guide d'ondes (32) peut être créée une onde électromagnétique stationnaire à vecteur champ électrique orienté perpendiculairement à la direction de propagation de celle-ci, et que la conduite de vapeurs (22), en matière isolante au moins dans la zone du guide d'ondes (32), traverse celui-ci perpendiculairement à la direction de propagation de l'onde ou obliquement par rapport à cette direction dans la zone d'un maximum d'amplitude du vecteur champ électrique.

19. Dispositif selon la revendication 18, caractérisé par le fait que la conduite de vapeurs (22) est raccordée du côté sortie à une pompe aspirante (26).

20. Dispositif selon l'une des revendications 18 et 19, caractérisé par le fait que la conduite de vapeurs (22) est raccordée du côté entrée à un récipient collecteur (20) qui peut être relié, de préférence par l'intermédiaire d'un organe d'étranglement (18), à au moins une source de vapeurs.

21. Dispositif selon la revendication 20, caractérisé par le fait que la source de vapeurs est un endroit de remplissage ou une tubulure évent d'un réservoir de solvant (14).

22. Dispositif selon la revendication 21, caractérisé par le fait que la source de vapeurs est un four d'évaporation pour déchets liquides ou solides.

23. Dispositif selon l'une des revendications 18 à 22, caractérisé par un poste de mélange prévu sur la conduite de vapeurs en amont de la cellule de pyrolyse et mélangeant les vapeurs organiques à un gaz rare tel qu'argon ou hélium.

24. Dispositif selon l'une des revendications 18 à 23, caractérisé par le fait qu'au récipient collecteur (20) sont reliées plusieurs cellules de pyrolyse électromagnétique (24).

25. Dispositif selon la revendication 24, caractérisé par le fait que les conduites de vapeurs (22) des différentes cellules de pyrolyse (24) sont raccordées au récipient collecteur (20) à des distances angulaires égales les unes des autres.

26. Dispositif selon la revendication 25, caractérisé par le fait que les conduites de vapeurs (22) saillent parallèlement les unes aux autres d'une surface de limitation du récipient collecteur (20) et que les guides d'ondes (32) traversés par les conduites de vapeurs (22) saillent en étoile à des distances angulaires égales les uns des autres du système de conduites de vapeurs.

27. Dispositif selon la revendication 26, caractérisé par le fait que les guides d'ondes (32) voisins sont placés alternativement dans deux plans.

28. Dispositif selon l'une des revendications 18 à 27, caractérisé par le fait que les guides d'ondes (32) peuvent être soumis à l'action d'un gaz de refroidissement, de préférence d'air de refroidissement.

29. Dispositif selon la revendication 28, caractérisé par le fait que le gaz de refroidissement peut être introduit en surpression dans le guide d'ondes (32) à proximité de l'émetteur de micro-ondes (34).

30. Dispositif selon l'une des revendications 28 et 29, caractérisé par le fait que la paroi (36) du guide d'ondes présente à proximité des conduites de vapeurs (22) des ouvertures ou perforations (40) pour la sortie du gaz de refroidissement.

31. Dispositif selon l'une des revendications 19 à 30, caractérisé par le fait que la pompe aspirante (26) est reliée du côté refoulement à un laveur de gaz perdus (28), en particulier un laveur à HCl.

32. Dispositif selon l'une des revendications 18 à 31, caractérisé par le fait que l'émetteur de micro-ondes (34) est constitué d'un magnétron.

33. Dispositif selon l'une des revendications 18 à 32, caractérisé par le fait que l'émetteur de micro-ondes (34) a une fréquence de fonctionnement de 1 à 10 GHz, de préférence de 2,4 GHz.

34. Dispositif selon l'une des revendications 18 à 33, caractérisé par le fait que le guide d'ondes (32) est de section rectangulaire et de préférence fermé à ses extrémités frontales.

35. Dispositif selon l'une des revendications 18 à 34, caractérisé par le fait que la conduite de vapeurs (22) est, au moins dans la zone traversant le guide d'ondes (32), en matière isolante, de préférence en quartz ou en matière céramique.

36. Utilisation du procédé selon l'une des revendications 1 à 17 pour la décomposition et/ou l'élimination pyrolytiques de vapeurs de solvants et de combustibles organiques et/ou de gaz toxiques et de combat.

37. Utilisation du procédé selon l'une des revendications 1 à 17 pour la décomposition et/ou l'élimination pyrolytiques d'une ou de plusieurs des vapeurs organiques suivantes : chlorure de méthylène, trichloréthylène, trichloro-1,1,1 éthane, tétrachloréthylène, acétate de méthyle, acétate d'éthyle, acétate de butyle, acétate d'éthylglycol, cyclohexanone, éthylglycol, butylglycol, monophénylglycol, acétate de butylglycol, diméthylformamide, diacétone alcool, monoéthylèneglycol, méthanol, éthanol, butanol, xylène, pétrole, essence, toluène, solvant naphta, méthyléthylcétone, méthylisobutylcétone, acétate de méthoxypropyle, acétone.

FIG. 1

FIG. 2

FIG. 3

FIG. 4

FIG. 5